# EUROPEAN PATENT APPLICATION

(11) **EP 4 234 508 A1**
(43) Date of publication of application: **30.08.2023**
(21) Application number: 22158387.5
(22) Date of filing: 24.02.2022
(51) Int. Cl.: C03C 17/36

(54) **VEHICLE GLAZING ROOF WITH METALLIC APPEARANCE AND SOLAR-CONTROL PROPERTIES**

(71) Applicant: AGP Worldwide Operations GmbH, 6300 Zug (CH)
(72) Inventor: KRASNOV, Alexey, Canton, 48188 (US); NÚÑEZ-REGUEIRO, José, Novi, 48375 (US)
(74) Representative: ABG Intellectual Property Law, S.L.

(57) **Abstract**

The present invention relates to a glazing adapted for automotive and other vehicle roofs with solar control and metallic appearance. The vehicle roof glazing of the present invention comprises a silver-inclusive coating with a specific combination of dielectric and Nickel-based (Ni-based) layers that makes the glazing an IR reflector, thereby reducing heat flux through it, and at the same time provides color with metallic aspect in a weight effective way.

## Description

### Field of the Invention

The invention relates to the field of vehicle glazing and, more specifically, to a glazing adapted for automotive and other vehicle roofs.

### Background of the Invention

A trend that has been growing in automotive design over the last several years has been an increase in the total area of the glazing. The increase in the glazed area is often accompanied by a reduction in vehicle weight due to the displacement of heavier materials. This has been a key part of the automotive strategy to meet regulatory requirements for higher fleet fuel efficiency as well as customer demand for more environmentally friendly vehicles. Also, as automotive interiors have been getting smaller, the glazing area has been increased in an effort to offset the claustrophobic effect that can result from a reduction in cabin volume. The increase in vision area and natural light tend to give the cabin a more open and airier feel. As a result, large panoramic glass roofs have become a popular option on many models. The increase in glass area increases the solar load on the vehicle if conventional glazing is used. This may require a high capacity air conditioning unit which increases weight and reduces fuel efficiency. However, it is possible to reduce the solar load through the use of solar control glazing. By reducing the solar load on the vehicle substantial improvements can be made in energy consumption. This is especially important for electric vehicles where the improvement directly translates into an increase in the mileage range of the vehicle which is a key costumer concern.

Two types of products have been used to limit the solar radiation into the vehicles. Solar absorbing glass compositions and solar reflecting coatings and films. The first approach, glass compositions, makes use of glass that has been manufactured with certain metal oxides added to the glass composition. The additives absorb solar radiation preventing it from entering the passenger compartment. While a heat absorbing window can be very effective the glass will heat up from the absorbed energy and transfer energy to the passenger compartment through convection and radiation. The second and more efficient method, solar control coatings and films, use infrared reflective (IR) coatings that are designed to permit the passage of visible light while reflecting solar infrared (IR) radiation back to the environment allowing the glass to stay cooler.

Solar control coatings can be placed in laminated glazing on the inner surface of the outer glass (surface number two), or optionally on the outer surface of the inner glass (surface number three). These coatings are normally made up of a stack of films/layers. The stack includes one or more thin metallic films, with high IR reflectance, disposed between anti-reflective dielectric layers. The IR reflective metallic films may be virtually any reflective metal, such as silver, copper, or gold. Silver (Ag) is most frequently used for this application due to its high optical transmittivity in the visible range and its relatively neutral color. Additional layers are used, such as anti-reflective dielectric layers, which are generally metal oxides selected to minimize visible reflectance and enhance visible transmittance.

At the same time, in electric vehicles cold weather can significantly reduce range due to the demands of the cabin heating system. Therefore, insulating the passenger compartment has become increasingly important, especially as the glazed area of the cabin has increased along with the accompanying thermal losses. This is also important for the comfort of the driver and passengers especially when a cold glass roof is located overhead or other glazing part is in close proximity to exposed skin.

Thermal energy is transferred through glass by means of convective transfer to the air and by being radiated by the glass surface. Emissivity is a measure of how much energy a surface will radiate. Emissivity is quantified as the ratio of heat emitted by an object to that of a perfect black body. Standard clear soda-lime glass has an emissivity of 0.84, radiating 84% for the heat absorbed, making it a very poor insulator. As a result, windows made of soda-lime glass have poor thermal properties.

Solar control coatings may also have low emissivity (low-E) properties. Generally speaking, solar-control techniques are aimed at reducing the transmission of solar energy through a glass article into an enclosed space such as a building or a vehicle interior, whereas low-E techniques focus on the reduction of the transmission of energy from inside a building or a vehicle to the outside.

To further improve the thermal properties, solar control coatings may be combined with the so-called low-E (low-emissivity) coatings based on Transparent Conductive Oxides (TCO) such as ITO coatings, which are preferably placed on surface number four of the laminated glazing, that is, the face of the inner glass oriented towards the interior of the vehicle (it may be worth to clarify that whereas the term low-E applies primarily to TCO-based coatings in the automotive industry as used herein, in the architectural glass field it is more commonly employed for Ag-based coatings).

Low-E coatings greatly reduce the quantity of thermal radiant heat energy emitted. This energy emitted is the major component of the heat transfer of a window. Low-E coatings are known having an emittance as low as 0.04, emitting only 4% the energy and reflecting back 96% of the energy. Reducing the emissivity of the glass surface greatly improves its insulating properties.

As noted above, silver has been extensively regarded as the best choice as the metal layer for solar control coatings because of its high infrared reflectivity and comparatively low absorption in the visible. Different silver-inclusive solar-control coatings are known in the art. Single-silver coatings are the simplest among them. They are easy to produce on large scale, have the least number of manufacturing issues due to their simplicity, and are inexpensive. These silver-based stacks only allow minor color tuning, and their primary advantage is the ability to serve as an efficient optical filter, i.e., allow high visible transmission while blocking IR.

There is a number of designs in prior art to add other metallic substantially transparent layers to the single-silver solar-control stack to improve solar performance. These designs have the same general features - they are meant to achieve both a high visible transmission, a low solar transmission, and color neutrality, such as those required in architectural glazing coatings.

However, for some applications, such as automotive roofs, the role of exterior aesthetics becomes dominant. For instance, for some vehicle body designs and colors, having roof glazing with metal-like appearance - such as steel or other metals - becomes highly desirable, enabling the car manufacture designer more freedom in offering attractive solutions to the market.

Thus, there is a need to provide a vehicle roof having a reduced weight and low IR solar transmittance similarly to the panoramic glass roofs with solar control properties known in the art, but conversely, exhibiting a color with metallic appearance like the traditional roofs made of metal sheets.

### Brief Summary of the Invention

The present invention provides a solution to the aforementioned problems by means of a vehicle roof glazing according to claim 1 and a vehicle according to claim 17. The dependent claims define preferred embodiments of the invention.

The vehicle roof of the present invention is a glazing with solar control properties and metallic appearance. More specifically, it includes a thin silver-inclusive coating with a specific combination of dielectric and nickel-based (Ni-based) layers that makes the glazing an IR reflector, thereby reducing heat flux through it, and at the same time provides color with metallic aspect without renouncing visible light transmission and in a weight effective weight.

Thus, in a first inventive aspect, the invention provides a vehicle roof glazing comprising:
- at least one glass layer (201, 203) having an outer (101, 301) and an inner (102, 302) surface; and
- a coating stack (18) deposited on the inner surface (102, 302) of said glass layer, the stack comprising starting from the glass surface on which it is deposited:
   i) at least one first dielectric layer (D1);
   ii) at least one first Ni-based layer (N1);
   iii) at least one second dielectric layer (D2);
   iv) a silver-inclusive layer;
   v) at least one second Ni-based layer (N2);
   vi) at least one third dielectric layer (D3);
   vii) at least one third Ni-based layer (N3); and
   viii) at least one fourth dielectric layer (D4);
   wherein the refractive index of said dielectric layers D2 and D3 is between 1.8 and 2.2 at 550 nm and the ratio of thickness of the layer D2 to that of D3 is between 0.2 and 2.

Advantageously, the total solar transmission of the laminate may be below about 32%. Total solar transmission (TTS) is the % of incident solar radiation transmitted by the laminate which includes the direct solar transmission plus the part of solar absorption re-radiated inwards. That is, TTS means the ratio expressed as a percent of the amount of solar energy that passes through the glazing (including energy absorbed and subsequently re-radiated to the interior) to the amount of solar energy falling on the glazing. The rest of solar energy is rejected or absorbed without being re-radiated.

Besides, the outside visible reflectance of the laminate may typically be between 3% and 15%, preferably between 4% and 10%. Reflectance is defined as the ratio of the radiant flux reflected from the surface of the laminate to the incident radiant flux.

In a second inventive aspect, the invention defines a vehicle comprising a roof glazing according to any of the embodiments of the first inventive aspect.

Advantages of the present invention include:
- Lower weight compared to typical metallic vehicle roofs.
- Well-controlled visible light transmittance.
- Low solar transmittance.
- Color with metallic appearance.
- Glass is quick and easy to clean compared to more sensitive painted metal.
- Better ability to withstand fading resulting from UV exposure compared to painted metal.

All the features described in this specification (including the claims, description and drawings) can be combined in any combination, with the exception of combinations of such mutually exclusive features.

### Brief Description of the Drawings

To better understand the invention, its objects and advantages, the following figures are attached to the specification in which the following is depicted:
Figure 1A illustrates a cross section of a typical laminated vehicle glazing (Prior Art).
Figure 1B illustrates a cross section of a typical monolithic vehicle glazing (Prior Art).
Figure 2A illustrates a cross section of a laminated vehicle glazing with a solar control coating on glass surface number two (Prior Art). Nevertheless, if the solar control coating corresponds to a coating stack as proposed herein, then Figure 2A represents an embodiment of the present invention.
Figure 2B illustrates a cross section of a monolithic vehicle glazing with a solar control coating on glass surface number two (Prior Art). Nevertheless, if the solar control coating corresponds to a coating stack as proposed herein, then Figure 2B represents an embodiment of the present invention.
Figure 3A illustrates the generic design of a laminated vehicle roof glazing comprising a coating stack deposited on surface number two (102) of the glass layer one (201) according to an embodiment of the present invention.
Figure 3B illustrates the generic design of a monolithic vehicle roof glazing comprising a coating stack deposited on surface number two (302) of the glass layer (203) according to an embodiment of the present invention.
Figure 4 illustrates a laminated vehicle roof glazing comprising a coating stack deposited on surface number two (102) of the glass layer one (201) according to a preferred example embodiment of the invention.
Figures 5A, 5B and 5C show the transmission and reflection spectra of the laminated vehicle roof glazing of examples 1, 2 and 3, respectively, as seen from the exterior side.

### Reference Numerals of Drawings

- 4: Bonding/Adhesive layer (plastic Interlayer)
- 18: Infrared reflecting coating, solar-control coating (stack)
- 101: Outer side of glass layer 201, number one surface.
- 102: Inner side of glass layer 201, number two surface.
- 103: Outer side of glass layer 202, number three surface.
- 104: Inner side of glass layer 202, number four surface.
- 301: Outer side of glass layer 203, number one surface
- 302: Inner side of glass layer 203, number two surface.
- 201: Outer glass layer
- 202: Inner glass layer
- 203: Glass layer for monolithic glazing

### Detailed Description of the Invention

The present disclosure can be understood by reference to the detailed descriptions, drawings, examples, and claims, of this disclosure. However, it is to be understood that this disclosure is not limited to the specific compositions, articles, devices, and methods disclosed unless otherwise specified, as such can, of course, vary. It is also to be understood that the terminology used herein is for the purpose of describing aspects only and is not intended to be limiting.

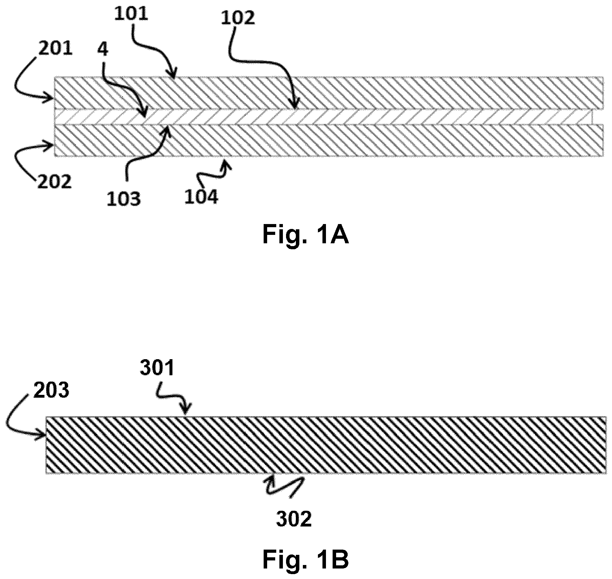

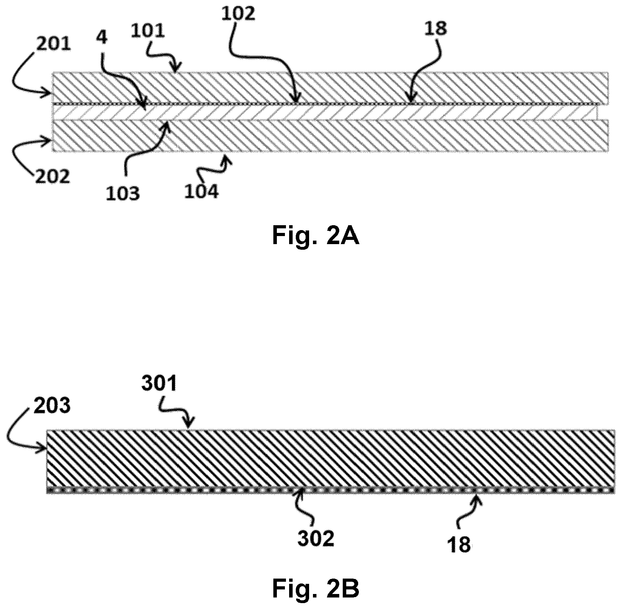

Typical automotive laminated glazing cross sections are illustrated in Figures 1A and 2A. A laminate is comprised of two layers of glass, the exterior or outer 201 and interior or inner 202 that are permanently bonded together by a plastic layer 4 (interlayer). In a laminate, the glass surface that is on the exterior of the vehicle is referred to as surface one, 101, or the number one surface. The opposite face of the outer glass layer 201 is surface two, 102, or the number two surface. The glass surface that is on the interior of the vehicle is referred to as surface four, 104, or the number four surface. The opposite face of the inner layer of glass 202 is surface three, 103, or the number three surface. Surfaces two 102 and three 103 are bonded together by the plastic layer 4. The laminate may have a coating 18 on one or more of the surfaces.

The invention is not limited to laminated glazing. Figures 1B and 2B show a typical tempered vehicle glazing cross section. Tempered glazing is typically comprised of a single layer of glass 203 which has been heat strengthened. The glass surface that is on the exterior of the vehicle is referred to as surface one, 301, or the number one surface. The opposite face of the exterior glass layer 203 is surface two, 302, or the number two surface. The number two surface 302 of a tempered glazing is on the interior of the vehicle. The glazing may have a coating 18 on the number one 301 and/or number two 302 surfaces.

The innovation of the vehicle roof glazing of the present invention lies in the particular design and features of the solar control coating stack (18).

In response to the regulatory requirements for increased automotive fuel efficiency as well as the growing public awareness and demand for environmentally friendly products, automotive original equipment manufacturers, around the world, have been working to improve the efficiency of their vehicles.

One of the key elements of their strategy to improve efficiency has been the concept of light weighting. Often, more traditional, less expensive, conventional materials and processes are being replaced by innovative new materials and processes which while most of the time being more expensive, still offer higher utility than the materials and processes being replaced due to their lower weight and the corresponding increase in fuel efficiency. Sometimes, the new materials and processes bring with them added functionality as well in addition to their lighter weight. Vehicle glazing has been no exception.

The glazed area of vehicles has been steadily increasing and, in the process, displacing other heavier materials. The popular large glass panoramic roofs and windshields are just one example of this trend. The use of solar control glazing in panoramic roofs and windshields permits the passage of visible light, helping to give the cabin an offsetting more open and airier feel, while solar infrared (IR) radiation is reflected back to the environment allowing the glass to stay cooler.

Aesthetics are an important influence on the way consumers judge a vehicle. Hence the vehicle's appearance is essential to designers and manufacturers. Aesthetic features can help vehicles to stand out among their competitors on the market therefore increasing popularity and market share. For instance, for some vehicle body designs and colors, having roof glazing with metal-like appearance - such as steel or other metals - becomes highly desirable.

The present invention provides a vehicle roof glazing having a reduced weight and low IR solar transmittance similarly to the panoramic glass roofs with solar control properties known in the art, but conversely, exhibiting a color with metallic appearance like the traditional roofs made of metal sheets.

The provided vehicle roof glazing comprises:
- at least one glass layer (201, 203) having an outer (101, 301) and an inner (102, 302) surface; and
- a coating stack (18) deposited on the inner surface (102, 302) of said glass layer, the stack comprising starting from the glass surface on which it is deposited:
   i) at least one first dielectric layer (D1);
   ii) at least one first Ni-based layer (N1);
   iii) at least one second dielectric layer (D2);
   iv) a silver-inclusive layer;
   v) at least one second Ni-based layer (N2);
   vi) at least one third dielectric layer (D3);
   vii) at least one third Ni-based layer (N3); and
   viii) at least one fourth dielectric layer (D4);
   wherein the refractive index of said dielectric layers D2 and D3 is between 1.8 and 2.2 at 550 nm and the ratio of thickness of the layer D2 to that of D3 is between 0.2 and 2.

In a preferred embodiment, the vehicle roof glazing according to the present invention is a laminate. According to this embodiment, the glazing further comprises at least one additional glass layer (202) and at least one plastic bonding layer (4).

Thus, a vehicle roof laminate according to the present invention comprises:
- at least two glass layers (201, 202), an outer glass layer (201) and an inner glass layer (202), wherein the outer glass layer (201) has an outer (101) and an inner (102) surface;
- at least one plastic bonding interlayer (4) between the outer (201) and the inner (202) glass layers; and
- a coating stack (18) deposited on the inner surface (102) of said glass layer (201), the stack being as previously defined.

In a preferred embodiment, the vehicle roof glazing according to the present invention comprises a thin coating stack (18) deposited either on the inner surface (102) of the glass layer (201) [in the case of a laminated glazing] or on the inner surface (302) of the glass layer (203) [in the case of a monolithic glazing], characterized in that the stack comprises a silver-inclusive layer with a specific combination of dielectric and nickel-based (Ni-based) layers as follows:
i) at least one dielectric layer (D1) deposited on said inner surface (102, 302);
ii) a first Ni-based layer (N1) deposited on top of said D1 layer;
iii) at least one dielectric layer (D2) deposited on top of said first N1 layer;
iv) a silver-inclusive layer deposited on top of said D2 layer;
v) a second Ni-based layer (N2) deposited on top of said silver-inclusive layer;
vi) at least one dielectric layer (D3) deposited on top of said N2 layer;
vii) a third Ni-based layer (N3) deposited on top of said D3 layer;
viii) at least one dielectric layer (D4) deposited on top of said N3 layer;
wherein the refractive index of said dielectric layers D2 and D3 is between 1.8 and 2.2 at 550 nm and the ratio of thickness of the layer D2 to that of D3 is between 0.2 and 2.

When describing the coating stack, we shall use the convention of numbering the coating layers in the order that they are deposited upon the glass substrate. Also, when discussing two layers, the one closest to the substrate shall be described as below the second layer. Likewise, the top layer is the very last layer applied and the bottom layer is the very first layer deposited upon the substrate. The top of an individual layer is the side of the layer furthest from the substrate while the bottom is closest to the substrate.

The roof glazing of the present invention is intended for vehicles and more particularly for automobiles (automotive roof) such as cars.

The glazing of the invention may comprise a single or multiple glass layers (201, 202, 203). To comply with regulatory requirements, single glass layer glazing must be tempered, and multiple layer glazing must be laminated.

Laminates, in general, are articles comprised of multiple sheets of thin, relative to their length and width, material, with each thin sheet having two oppositely disposed major faces and typically of relatively uniform thickness, which are permanently bonded to one and other across at least one major face of each sheet.

The glass layers of a laminate may be annealed or strengthened.

Annealed glass is glass that has been slowly cooled from the bending temperature down through the glass transition range. This process relieves any stress left in the glass from the bending process.

There are two processes that can be used to increase the strength of glass. They are thermal strengthening, in which the hot glass is rapidly cooled (quenched) and chemical tempering which achieves the same effect through an ion exchange chemical treatment. The types of glass that may be used include but are not limited to the common soda-lime variety typical of automotive glazing as well as aluminosilicate, lithium aluminosilicate, borosilicate, glass ceramics, and the various other inorganic solid amorphous compositions which undergo a glass transition and are classified as glass including those that are not transparent.

The thickness of the glass layers may be for instance between 0.3 mm and 5.0 mm, such as between 0.5 mm and 4.0 mm or between 1.0 mm and 3.0 mm, e.g. about 1.5 mm, 1.6 mm, 1.7 mm, 1.8 mm, 1.9 mm, 2.0 mm, 2.1 mm, 2,2 mm, 2.3 mm, 2.4 mm, 2.5 mm, 2.6 mm, 2.7 mm, 2.8 mm, 2.9 mm or 3.0 mm. More particularly, the glass layer may be an about 2.1 mm thick soda-lime glass layer, including ultra-clear, clear or green soda-lime.

The plastic bonding layer 4 (interlayer) has the primary function of bonding the major faces of adjacent layers to each other. The material selected is typically a clear thermoset plastic such as polyvinyl butyral (PVB). In addition to PVB, ionoplast polymers, ethylene vinyl acetate (EVA), cast in place (CIP) liquid resin and thermoplastic polyurethane (TPU) can also be used. Interlayers are available with enhanced capabilities beyond bonding the glass layers together. In different embodiments, the glass laminate of the present invention may include interlayers designed to dampen sound or include ionoplastic materials. Such interlayers are comprised whole or in part of a layer of plastic that is softer and more flexible than that normally used. Additional embodiments of the present invention include a plastic interlayer made of tinted PVB. Tinted PVB interlayers may have different levels of obscuration and can be of different thicknesses. The thickness of the plastic bonding layer may be for instance between 0.3 mm and 2.0 mm, such as between 0.5 mm and 1.0 mm, e.g. about 0.5 mm, 0.6 mm, 0.7 mm, 0.8 mm, 0.9 mm or 1.0 mm. Particular thicknesses for the plastic bonding layer, e.g. a (tinted) PVB interlayer, are for instance 0.38 mm, 0.631 mm and 0.76 mm.

In additional embodiments, the PVB plastic interlayer is comprised of particles that absorb partially the infrared heat of the sun. The interlayer may also be of a type which has solar attenuating properties.

In a preferred embodiment, the vehicle roof glazing of the present invention is a laminate that comprises two glass layers and one plastic bonding interlayer.

The coating stack of the vehicle roof glazing according to the present invention comprises four dielectric layers or dielectric layer stacks (D1-D4) separated from each other by three Ni-based layers or layer stacks (N1-N3). Additionally, the second Ni-based layer or layer stack (N2) is deposited on top of a silver-inclusive layer (Ag).

A nickel-based layer is a layer comprising nickel either in the form of pure metal or as an alloy and optionally may be oxidized.

The generic design for Ag-inclusive solar-control stacks in the state of the art typically includes at least a base layer deposited on the glass which must have good sodium blocking properties (to block Na atoms diffusing in the stack from the glass), a seed layer under the Ag layer to control the crystalline properties of the silver, a blocking layer on top of the Ag layer to prevent damage during deposition and a top layer which must provide a good durability and be a good oxygen barrier to ensure good encapsulation during post-deposition heat treatment, before the coating is encapsulated in a laminated glazing. We note however that the layers of the coating may have more than one function.

In the present invention, the design of the coating stack (18) has been carefully optimized for providing both a metallic-like exterior appearance and a low solar transmittance.

The coating stack (18), starting from the glass surface on which the coating is deposited at first place comprises at least one first dielectric layer (D1). The at least one first dielectric layer (D1) preferably is or comprises at least one Si-based dielectric layer, more preferably is one Si-based dielectric layer, and even more preferably is a layer of SiOx, SiOxNy or SiNx. Still more preferably the first dielectric layer (D1) is a layer of SiNx.

The thickness of the at least one first dielectric layer (D1) may be for instance between 70 nm and 100 nm such as between 80 nm and 90 nm or between 85 nm and 90 nm, e.g., about 85 nm, 86 nm, 87 nm, 88 nm, 89 nm or 90 nm. More particularly, the at least one first dielectric layer (D1) may range from 86 nm to 88 nm, e.g., about 86 nm, 86.1 nm, 86.2 nm, 86.3 nm, 86.4 nm, 86.5 nm, 86.6 nm, 86.7 nm, 86.8 nm, 86.9 nm, 87 nm, 87.1 nm, 87.2 nm, 87.3 nm, 87.4 nm, 87.5 nm 87.6 nm 87.7 nm, 87.8 nm, 87.9 nm or 88 nm. More particularly, the first dielectric layer (D1) may be an about 86.2, 87.1 or 87.3 nm thick SiNx layer.

Preferably, the refractive index of D1 at 550 nm is about 2.1.

The coating stack (18) further comprises at least one first Ni-based layer (N1). The at least one first Ni-based layer (N1) preferably is or comprises at least one layer selected from the group consisting of NiCr, NiCrOx, NiTi, NiTiOx, NiNb, NiNbOx, NiNbCrOx, NiNbZr and NiNbZrOx. More preferably, the first Ni-based layer (N1) is a layer of NiCr.

The thickness of the at least one first Ni-based layer (N1) may be for instance between 0.01 nm and 4 nm such as between 0.5 nm and 3 nm, e.g. about 0.5 nm, 1 nm, 1.5 nm, 2 nm, 2.5 nm or 3 nm. More particularly, the at least one first Ni-based layer (N1) may range between 1 nm and 2.5 nm, e.g. about 1 nm, 1.1 nm, 1.2 nm, 1.3 nm, 1.4 nm, 1.5 nm, 1.6 nm, 1.7 nm, 1.8 nm, 1.9 nm, 2 nm, 2.1 nm, 2.2 nm, 2.3 nm, 2.4 nm or 2.5 nm. More particularly, the first Ni-based layer (N1) may be an about 1.6 nm thick NiCr layer.

The coating stack (18) further comprises at least one second dielectric layer (D2). The at least one second dielectric layer (D2) preferably is or comprises at least one layer selected from the group consisting of ZnSnOx, ZnAlOx and ZnTiOx. More preferably, the at least one second dielectric layer (D2) is a bilayer stack and even more preferably a bilayer of ZnSnOx and ZnAlOx or a bilayer of ZnSnOx and ZnTiOx.

The thickness of the at least one second dielectric layer (D2) may be for instance between 40 nm and 100 nm such as between 50 nm and 90 nm, e.g. about 50 nm, 55 nm, 60 nm, 65 nm, 70 nm, 75 nm, 80 nm, 85 nm, or 90 nm. More particularly, the at least one second dielectric layer (D2) may be a bilayer wherein each layer independently ranges from 5 nm to 75 nm. More particularly, the at least one second dielectric layer (D2) may be an about 89.7 nm, 72.9 nm or 51.5 nm thick bilayer of ZnSnOx and ZnAlOx.

The coating stack (18) further comprises a silver-inclusive layer (sometimes referred here as Ag for simplicity). Preferably, the silver-inclusive layer comprises more than 60 wt. % of silver (e.g. more than 65 wt.%, 70 wt.%, 75 wt.%, 80 wt.%, 85 wt.%, 90 wt.%, 95 wt.% or even 100 wt.%).

The thickness of the silver-inclusive layer (Ag) may be for instance between 8 nm and 30 nm, preferably between 8 nm and 20 nm or between 11 nm and 15 nm, e.g. about 11 nm, 12 nm, 13 nm, 14 nm or 15 nm. More particularly, the silver-inclusive layer may range between 12 nm and 13 nm, e.g. about 12 nm, 12.1 nm, 12.2 nm, 12.3 nm, 12.4 nm, 12.5 nm, 12.6 nm, 12.7 nm, 12.8 nm, 12.9 nm or 13 nm. More particularly, the thickness of the silver-inclusive layer may be about 12.2 nm or 12.9 nm and preferably comprises more than 60% of silver.

The coating stack (18) further comprises at least one second Ni-based layer (N2). The least one second Ni-based layer (N2) preferably is or comprises at least one layer selected from the group consisting of NiCr, NiCrOx, NiTi, NiTiOx, NiNb, NiNbOx, NiNbCrOx, NiNbZr and NiNbZrOx. More preferably, the second Ni-based layer (N2) is a layer of NiCrOx.

The thickness of the least one second Ni-based layer (N2) may be for instance between 0.01 nm and 4 nm such as between 0.5 nm and 3 nm, e.g. about 0.5 nm, 1 nm, 1.5 nm, 2 nm, 2.5 nm or 3 nm. More particularly, the at least one second Ni-based layer (N2) may range between 1 nm and 2.5 nm, e.g. about 1 nm, 1.1 nm, 1.2 nm, 1.3 nm, 1.4 nm, 1.5 nm, 1.6 nm, 1.7 nm, 1.8 nm, 1.9 nm, 2 nm, 2.1 nm, 2.2 nm, 2.3 nm, 2.4 nm or 2.5 nm. More particularly, the second Ni-based layer (N2) may be an about 2 nm thick NiCrOx layer.

The coating stack (18) further comprises at least one third dielectric layer (D3). The at least one third dielectric layer (D3) preferably is or comprises at least one layer selected from the group consisting of ZnSnOx, ZnAlOx and ZnTiOx. More preferably, the third dielectric layer (D3) is a layer of ZnSnOx.

The thickness of the at least one third dielectric layer (D3) may be for instance between 60 nm and 130 nm such as between 70 and 120 nm, e.g. about 70 nm, 75 nm, 80 nm, 85 nm, 90 nm, 95 nm, 100 nm, 105 nm, 110 nm, 115 nm or 120 nm. More particularly, the third dielectric layer (D3) may be an about 73.1 nm, 90.8 nm or 119.1 nm thick ZnSnOx layer.

The coating stack (18) further comprises at least one third Ni-based layer (N3). The at least one third Ni-based layer (N3) preferably is or comprises at least one layer selected from the group consisting of NiCr, NiCrOx, NiTi, NiTiOx, NiNb, NiNbOx, NiNbCrOx, NiNbZr and NiNbZrOx. More preferably, the third Ni-based layer (N3) is a layer of NiCrOx.

The thickness of the at least one third Ni-based layer (N3) may be for instance between 0.01 nm and 4 nm such as between 0.5 nm and 3 nm, e.g. about 0.5 nm, 1 nm, 1.5 nm, 2 nm, 2.5 nm or 3 nm. More particularly, the at least one third Ni-based layer (N3) may range between 1 nm and 2.5 nm, e.g. about 1 nm, 1.1 nm, 1.2 nm, 1.3 nm, 1.4 nm, 1.5 nm, 1.6 nm, 1.7 nm, 1.8 nm, 1.9 nm, 2 nm, 2.1 nm, 2.2 nm, 2.3 nm, 2.4 nm or 2.5 nm. More particularly, the third Ni-based layer (N3) may be an about 1.7 nm thick NiCrOx layer.

The coating stack (18) further comprises at least one fourth dielectric layer (D4). The at least one fourth dielectric layer (D4) preferably is or comprises at least one Si-based dielectric layer, more preferably is or comprises one or more Si-based dielectric layers selected from the group consisting of SiOx, SiOxNy and SiNx. Still more preferably the at least one fourth dielectric layer (D4) is a layer of SiNx or a bilayer of SiOxNy and SiOx.

The thickness of the at least one fourth dielectric layer (D4) may be for instance between 30 nm and 140 nm such as between 30 nm and 120 nm, e.g. about 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, 105 nm, 110 nm, 115 nm or 120 nm.. More particularly, the at least one fourth dielectric layer (D4) is an about 33.8 nm, 71.7 nm or 119.6 nm thick SiNx layer.

The total thickness of the thin-film coating stack may range for instance from 300 nm to 400 nm, preferably from 315 nm to 390 nm.

The total solar transmission (TTS) of the laminate preferably is no greater than about 32% or no greater than about 30%. Further, the outside visible reflectance of the laminate preferably is between 4% and 15%, preferably between 4% and 10%. In particular embodiments, the outside visible reflectance was between 4% and 5%, specifically about 4.6% or 4.7%.

The ratio of thickness of the at least one second dielectric layer (D2) to that of the at least one third dielectric layer (D3) is between 0.2 and 2.0, preferably between 0.5 and 1.5. In a more particular embodiment, the thickness ratio between (D2) and (D3) ranges from 0.5 to 1.3.

The refractive index of the at least one second dielectric layer (D2) and the at least one third dielectric layer (D3) is between 1.8 and 2.2 at 550 nm, preferably the refractive index of D2 and/or D3 is about 2.

In certain embodiments, at least one first dielectric layer (D1) and/or the at least one fourth dielectric layer (D4) comprise a Si-based dielectric layer. Preferably, D1 is a layer of SiOx, SiOxNy or SiNx and/or D4 is a layer of SiNx or a bilayer of SiOxNy and SiOx.

In certain embodiments, the at least one second dielectric layer (D2) and/or the at least one third dielectric layer (D3) comprise at least one layer selected from the group consisting of ZnSnOx, ZnAlOx and ZnTiOx. Preferably, D2 is a bilayer of ZnSnOx and ZnAlOx or a bilayer of ZnTiOx and ZnAlOx and/or D3 is a layer of ZnSnOx.

In certain embodiments, the at least one first Ni-based layer (N1), the at least one second Ni-based layer (N2), and/or the at least one third Ni-based layer (N3) comprise at least one layer selected from the group consisting of NiCr, NiCrOx, NiTi, NiTiOx, NiNb, NiNbOx, NiNbCrOx, NiNbZr and NiNbZrOx; preferably at least one of the Ni-based layers N1, N2 or N3 comprises NiCr, NiTi or is substantially oxidized. More preferably, N1 is a layer of NiCr, N2 is a layer of NiCrOx and/or N3 is a layer of NiCrOx.

In a preferred embodiment, the coating stack (18) is as follows: SiNx (D1), NiCr (N1), ZnAlOx and ZnSnOx (D2), Ag, NiCrOx (N2), ZnSnOx (D3), NiCrOx (N3) and SiNx (D4).

In another preferred embodiment, the coating stack (18) is as follows: SiNx (D1), NiCr (N1), ZnAlOx and ZnSnOx (D2), Ag, NiCrOx (N2), ZnSnOx (D3), NiCrOx (N3) and SiOxNy and SiOx (D4).

In another preferred embodiment, the coating stack (18) is as follows: SiNx (D1), NiCr (N1), of ZnTiOx and ZnAlOx (D2), Ag, NiCrOx (N2), ZnSnOx (D3), NiCrOx (N3) and SiNx (D4).

In another preferred embodiment, the coating stack (18) is as follows: SiNx (D1), NiCr (N1), of ZnTiOx and ZnAlOx (D2), Ag, NiCrOx (N2), ZnSnOx (D3), NiCrOx (N3) and SiOxNy and SiOx (D4).

Among the elements of a valuable appearance is the color of the vehicle roof laminate. Color can be described mathematically. CIELAB is one of the many color spaces and is normally used in automotive and architectural industries The CIELAB L*, a*, b* color space mathematically describes all perceivable colors in three dimensions: L* for perceptual lightness, a* for green-red, and b* for blue-yellow. See Hunter Lab, Applications Note, "Insight on Color," Vol. 8, No. 7 (2008). In the CIELAB color space, the L* axis runs from top to bottom. The maximum L* value is 100, which indicates a perfect reflecting diffuser (i.e., the lightest white). The minimum L* value is 0, which indicates a perfect absorber (i.e., the darkest black). Positive a* is red. Negative a* is green. Positive b* is yellow. Negative b* is blue. CIELAB a* or b* values equal to 0 indicate no red-green or blue-yellow color appearance, in which case the article would appear pure white. In contrast, a* or b* values that deviate far from 0 indicate that light is non-uniformly absorbed or reflected. As a* or b* values deviate from 0, the color may no longer appear as bright white. One of the most important attributes of the CIELAB model is device independence, which means that the colors are defined independent of their nature of creation or the device they are displayed on.

The L*, a*, and b* values of the CIELAB color scale can be obtained using any CIELAB color measurement instrument and are calculated from known formulas. See Hunter Lab, Applications Note, "Insight on Color," Vol. 8, No. 7 (2008).

Thus, the uniqueness of the CIELAB space is in its perceived uniformity. A change in the numerical difference between two color coordinates is proportionate difference in color perceived by the eye.

Some embodiments include the glazing of the present invention wherein the outside reflected color (CIELAB) is steel-like:
a* between 0 and +0.15; and
b* between -0.5 and -0.6.

Some embodiments include the glazing of the present invention wherein the outside reflected color (CIELAB) is:
a* between -1.0 and -1.2; and
b* between +0.1 and +0.2.

Some embodiments include the glazing of the present invention wherein the outside reflected color (CIELAB) is:
a* between +1 and +1.3; and
b* between 0 and +0.2.

Some embodiments include the glazing of the present invention wherein the outside reflected color (CIELAB) is:
a* between +1.45 and +1.55; and
b* between -0.6 and -0.7.

Some embodiments include the glazing of the present invention wherein the outside reflected color (CIELAB) is:
a* between +1.2 and +1.4; and
b* between -1.1 and -1.3.

A wide range of coatings, used to enhance the performance and properties of glass, are available and in common use. These include but are not limited to anti-reflective, hydrophobic, hydrophilic, self-healing, self-cleaning, anti-bacterial, anti-scratch, anti-graffiti, anti-fingerprint, and anti-glare. Any of these coatings may be combined with and applied to the vehicle roof glazing of the invention.

Methods of application include Magnetron Sputtered Vacuum Deposition (MSVD) as well as others known in the art that are applied via pyrolytic, spray, controlled vapor deposition (CVD), dip, sol-gel, and other methods. The coating stack of the invention may be conveniently applied by means of a Physical Vapor Deposition (PVD) method, such as by means of sputtering like in the MSVD process.

The invention also provides a vehicle comprising the roof glazing as previously defined.

The term vehicle in the present invention includes, but is not limited to, road vehicles (e.g. cars, busses, trucks, agricultural and construction vehicles, cabin motorbikes), railway vehicles (e.g. locomotives, coaches), aircraft (e.g. airplanes, helicopters), boats, ships and the like. For instance, the vehicle may be a road vehicle and more particularly a car.

The skilled person knows that numerical values relating to measurements are subject to measurement errors which place limits on their accuracy. Where terms such as "about" or "approximately" are applied to a particular value (e.g. "about 200 °C" or "approximately 200 °C") or to a range (e.g. "about x to approximately y"), the value or range is interpreted as being as accurate as the method used to measure it. Unless explicitly stated otherwise, the general convention in the scientific and technical literature may be applied so that the last digit of numerical values preferably indicates the precision of measurement. Thus, unless other error margins are given, the maximum margin is preferably ascertained by applying the rounding-off convention to the last decimal place. For instance, a value of 3.5 preferably has an error margin of 3.45 to 3.54 and a range of 2% to 10% preferably covers a range of 1.5% to 10.4%. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximations due to the experimental and/or measurement conditions for such given value.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 % to about 5 %" should be interpreted to include not only the explicitly recited values of about 1 % to about 5 %, but also include individual values and sub-ranges within the indicated range. Thus, included in this numerical range are individual values such as 2, 3. and 4 and sub-ranges such as from 1-3, from 2-4, and from 3-5, etc. This same principle applies to ranges reciting only one numerical value.

### EXAMPLES

### Example 1

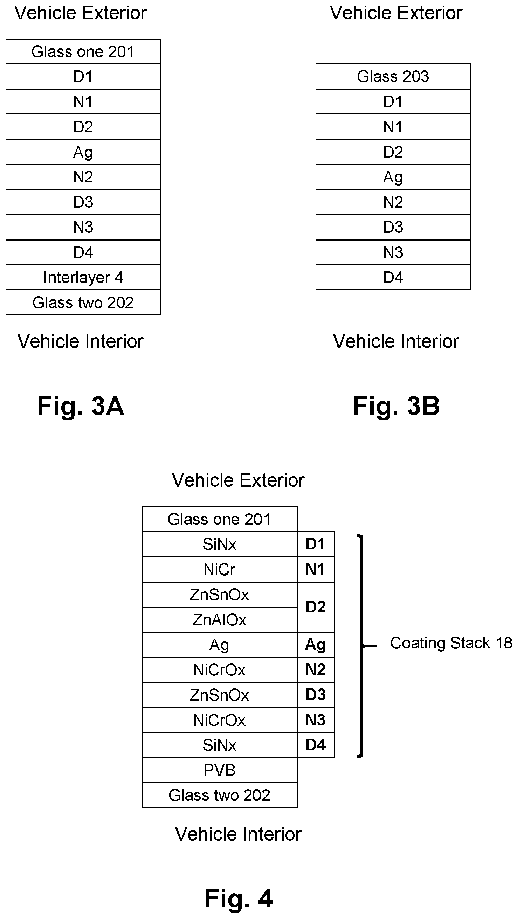

This example relates to a vehicle roof laminate, the design of which is depicted in Fig. 4. The roof exterior has a steel-like appearance. CIELAB color coordinates are:
a* = +0.1; and
b* = -0.55.

The exterior visible reflection is 4.6%. TTS=29.8%.

The layer sequence deposited on surface two (102) of the outermost pane of glass (201) is as follows:

| | |
|---|---|
| Glass one (201) | 2.1 mm |
| SiNx | 86.2 nm |
| NiCr | 1.6 nm |
| ZnSnOx | 74.6 nm |
| ZnAlOx | 15.1 nm |
| Ag | 12.2 nm |
| NiCrOx | 2.0 nm |
| ZnSnOx | 73.1 nm |
| NiCrOx | 1.7 nm |
| SiNx | 119.6 nm |
| Tinted PVB (4) | 0.631 mm |
| Glass two (202) | 2.1 mm |

The thickness ratio between the bottom (closest to the glass substrate on which the stack is deposited) ZnSnOx+ZnSnOx (D2) and top ZnSnOx (D3) dielectrics is 1.23. The refractive index of each dielectric of the second dielectric layer (D2) is about 2.0 at 550 nm. The refractive index of the third dielectric layer (D3) is about 2.0 at 550 nm.

The laminating interlayer is a tinted PVB. The tinted PVB is used for laminating it to Glass two (202), which is closer than Glass one (201) to the vehicle interior.

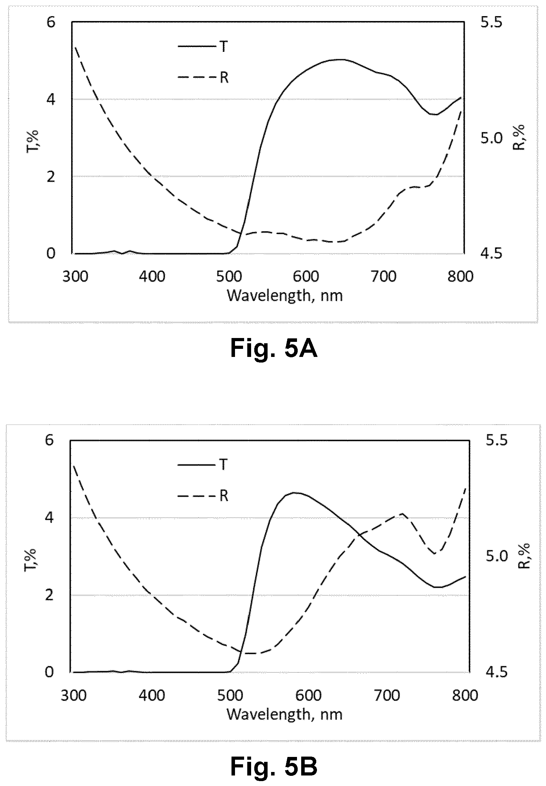

The transmission and reflection spectra of this laminate are as depicted in Figure 5A.

### Example 2

Similar to example 1, however with a few modifications: The thickness ratio between the bottom ZnSnOx+ZnSnOx (D2) and top ZnSnOx (D3) dielectrics is 0.61.

The refractive index of each dielectric of the second dielectric layer (D2) is about 2.0 at 550 nm. The refractive index of the third dielectric layer (D3) is about 2.0 at 550 nm. The exterior visible reflection is 4.6 %. Total solar transmission is 24.0%.

CIELAB color coordinates are:
a* = - 1.03 and
b* = +0.14.

The stack is:

| | |
|---|---|
| Glass one (201) | 2.1 mm |
| SiNx | 87.1 nm |
| NiCr | 1.6 nm |
| ZnSnOx | 58.4 nm |
| ZnAlOx | 14.5 nm |
| Ag | 12.2 nm |
| NiCrOx | 2.0 nm |
| ZnSnOx | 119.1 nm |
| NiCrOx | 1.7 nm |
| SiNx | 33.8 nm |
| Tinted PVB (4) | 0.631 mm |
| Glass two (202) | 2.1 mm |

The transmission and reflection spectra of this laminate are as depicted in Figure 5B.

### Example 3

Similar to example 1, however with a few modifications: The thickness ratio between the bottom ZnSnOx+ZnSnOx (D2) and top ZnSnOx (D3) dielectrics is 0.57.

The refractive index of each dielectric of the second dielectric layer (D2) is about 2.0 at 550 nm. The refractive index of the third dielectric layer (D3) is about 2.0 at 550 nm. The exterior visible reflection is 4.7%. Total solar transmission is 25.2 %.

CIELAB color coordinates are:
a* = +1.14 and
b* = +0.03.

The stack is:

| | |
|---|---|
| Glass one (201) | 2.1 mm |
| SiNx | 87.3 nm |
| NiCr | 1.6 nm |
| ZnSnOx | 35.7 nm |
| ZnAlOx | 15.8 nm |
| Ag | 12.9 nm |
| NiCrOx | 2.0 nm |
| ZnSnOx | 90.8 nm |
| NiCrOx | 1.7 nm |
| SiNx | 71.7 nm |
| Tinted PVB (4) | 0.631 mm |
| Glass two (202) | 2.1 mm |

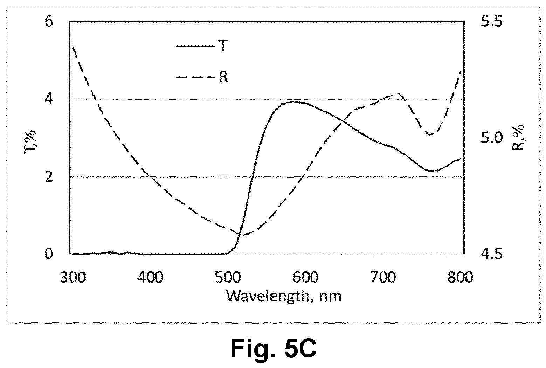

The transmission and reflection spectra of this laminate are as depicted in Figure 5C.

## Claims

1. A vehicle roof glazing comprising:
- at least one glass layer (201, 203) having an outer (101, 301) and an inner (102, 302) surface; and
- a coating stack (18) deposited on the inner surface (102, 302) of said glass layer, the stack comprising starting from the glass surface on which it is deposited:
i) at least one first dielectric layer (D1);
ii) at least one first Ni-based layer (N1);
iii) at least one second dielectric layer (D2);
iv) a silver-inclusive layer;
v) at least one second Ni-based layer (N2);
vi) at least one third dielectric layer (D3);
vii) at least one third Ni-based layer (N3); and
viii) at least one fourth dielectric layer (D4);
wherein the refractive index of said dielectric layers D2 and D3 is between 1.8 and 2.2 at 550 nm and the ratio of thickness of the layer D2 to that of D3 is between 0.2 and 2.

2. The glazing of claim 1 further comprising at least one additional glass layer (202) and at least one plastic bonding layer (4), thus resulting in a laminate.

3. The glazing of any one of the preceding claims wherein the total solar transmission of the laminate is below about 32%.

4. The glazing of any one of the preceding claims wherein the ratio of thickness of the at least one second dielectric layer (D2) to that of the at least one third dielectric layer (D3) is between 0.5 and 1.5.

5. The glazing of any one of the preceding claims wherein the refractive index of the at least one second dielectric layer (D2) and/or the at least one third dielectric layer (D3) is about 2 at 550 nm.

6. The glazing of any one of the preceding claims wherein the refractive index of the at least one first dielectric layer (D1) is about 2.1 at 550 nm.

7. The glazing of any one of the preceding claims wherein the at least one first dielectric layer (D1) and/or the at least one fourth dielectric layer (D4) comprise a Si-based dielectric layer.

8. The glazing of claim 7 wherein D1 is a layer of SiOx, SiOxNy or SiNx and/or D4 is a layer of SiNx or a bilayer of SiOxNy and SiOx.

9. The glazing of any one of the preceding claims wherein the at least one second dielectric layer (D2) and/or the at least one third dielectric layer (D3) comprise at least one layer selected from the group consisting of ZnSnOx, ZnAlOx and ZnTiOx;

10. The glazing of claim 9 wherein D2 is a bilayer of ZnSnOx and ZnAlOx or a bilayer of ZnTiOx and ZnAlOx and/or D3 is a layer of ZnSnOx.

11. The glazing of any one of the preceding claims wherein the at least one first Ni-based layer (N1), the at least one second Ni-based layer (N2), and/or the at least one third Ni-based layer (N3) comprise at least one layer selected from the group consisting of NiCr, NiCrOx, NiTi, NiTiOx, NiNb, NiNbOx, NiNbCrOx, NiNbZr and NiNbZrOx; preferably at least one of the Ni-based layers N1, N2 or N3 comprises NiCr, NiTi or is substantially oxidized.

12. The glazing of claim 11, wherein N1 is a layer of NiCr, N2 is a layer of NiCrOx and/or N3 is a layer of NiCrOx.

13. The glazing of any one of the preceding claims wherein the thickness of each of the layers N1, N2, and N3 is between 0.01 nm and 4 nm.

14. The glazing of any one of the preceding claims wherein the silver-inclusive layer comprises more than 60% of silver and/or has a thickness of between 8 nm and 30 nm, preferably between 11 nm and 15 nm.

15. The glazing of any one of the preceding claims wherein the outside visible reflectance is between 3% and 15%, preferably between 4% and 10%.

16. The glazing of any one of the preceding claims wherein the outside reflected color (CIELAB) is:
a* between 0 and +0.15; and
b* between -0.5 and 0.6 ;
or wherein the outside reflected color (CIELAB) is:
a* between -1.0 and -1.2 and
b* between +0.1 and +0.2;
or wherein the outside reflected color (CIELAB) is:
a* between +1.0 and +1.3 and
b* between 0 and +0.2;
or wherein the outside reflected color (CIELAB) is:
a* between +1.45 and +1.55; and
b* between -0.6 and -0.7;
or wherein the outside reflected color (CIELAB) is:
a* between +1.2 and +1.4; and
b* between -1.1 and -1.3;

17. A vehicle comprising a roof glazing according to any of the preceding claims.
